# EUROPEAN PATENT APPLICATION

(11) **EP 3 913 165 A1**
(43) Date of publication of application: **24.11.2021**
(21) Application number: 21153249.4
(22) Date of filing: 25.01.2021
(51) Int. Cl.: E04F 15/02, E04F 15/10, B32B 5/02, C09J 7/30, C09J 7/20, B32B 7/12, B32B 27/08, B32B 27/30, B32B 27/36, B32B 27/12

(54) **A CONNECTOR AND A FLOOR COVERING**

(30) Priority: 20.05.2020 EP 20175761
(71) Applicant: Illinois Tool Works INC., Glenview, IL 60025 (US)
(72) Inventor: DE WOLF, Peter, Illinois, 60025 (US)
(74) Representative: HGF

(57) **Abstract**

A connector for connecting sections of flooring together is disclosed. The connector comprises a carrier layer and an adhesive layer located on a side of the carrier layer. The connector is configured such that, in use, the adhesive layer adheres to the underside of adjacent flooring sections to couple the adjacent flooring sections together. The carrier layer comprises a biodegradable or compostable or recyclable material, and the adhesive layer comprises a biodegradable or compostable or recyclable material. A floor covering comprising a plurality of flooring sections; and a plurality of such is disclosed, wherein adjacent flooring sections are coupled by at least one connector. Methods of manufacturing/disposing such connectors are also disclosed.

## Description

The present invention relates to a connector for connecting sections of flooring together. In particular, the present invention relates to a connector for connecting sections of carpet tiles together.

### Background

It is typical to cover floors (for example the floors of domestic or commercial properties) with suitable floor coverings. Some floor coverings comprise a single piece, for example a carpet dispensed from a roll, attached to the floor.

However, other floor coverings are made up of a plurality of discrete or modular sections, for example tiles, carpet tiles, vinyl tiles or the like. Such discrete sections are arranged with adjacent sections abutting to form a continuous floor coverings.

In some examples, the discrete sections are each adhered to the underlying surface. In other examples, the adjacent sections within the floor covering are connected to one another to bring the sections together, effectively as a single piece floor covering. The resulting floor covering may be attached to the underlying floor or arranged as a 'floating floor'.

Adhesive tape, for example double-sided adhesive tape, has been used to connect flooring sections together. That is, the tape is applied along the joins between adjacent sections. However, such tapes can lack suitable thickness and mechanical properties (for example stiffness) to ensure the adjacent sections remain in a continuous, abutting arrangement. In addition, such tapes include a release layer on a top surface thereof to allow the tape to be self-wound. Such release layers are typically damaging to the environment in that they cannot be recycled and require high energy input to apply.

The replacement of floor coverings is a source of much waste. That is, in many circumstances floor coverings will result in disposal via landfill. Such disposal can have a significant environmental impact. Although there has been a push to design floorings with recycling in mind, such designs generally do not account for the waste produced by the connecting means used to connect the modular flooring sections together. In addition, such floorings only have an improved environmental impact if they are recycled as intended, rather than disposed via landfill.

It is an aim of the present invention to provide means for connecting floor sections together, which overcomes the problems described above.

EP1799935B1 discloses a floor covering comprising modular carpet tiles.

CN 110183984 discloses a box sealing tape unsuitable for use as a connector for connecting sections of flooring together (for example, the box sealing tape would have insufficient tensile strength and flexural stiffness to effectively connect sections of flooring together).

### Brief Summary

According to a first aspect of the present invention there is provided a connector for connecting sections of flooring together, the connector comprising:
a carrier layer; and
an adhesive layer located on a side of the carrier layer;
wherein the connector is configured such that, in use, the adhesive layer adheres to the underside of adjacent flooring sections to couple the adjacent flooring sections together, wherein the carrier layer comprises a biodegradable or compostable or recyclable material, and
wherein the adhesive layer comprises a biodegradable or compostable or recyclable material.

Aptly, the carrier layer comprises an organic material.

Aptly, the carrier layer comprises a biopolymer, a biofilm or a non-woven material.

Aptly, the connector comprises a liner material releasably coupled to the adhesive layer.

Aptly, the connector is configured to only partially extend along the edges of coupled flooring sections.

Aptly, the connector comprises an adhesive positioning element located on the side of the carrier layer opposed to the adhesive layer.

Aptly, the adhesive layer comprises an adhesive including 100% solids.

According to a second aspect of the present invention there is provided a dispensing apparatus, for supporting and dispensing connectors for connecting sections of flooring together, the dispensing apparatus comprising:
a supporting strip; and
one or more connectors according to the first aspect of the invention;
wherein the adhesive positioning element of each of the one or more connectors is releasably attached to the supporting strip.

According to a third aspect of the present invention there is provided a floor covering comprising:
a plurality of flooring sections; and
a plurality of connectors according to the first aspect of the invention,
wherein adjacent flooring sections are coupled by at least one connector.

Aptly, the flooring sections are discrete carpet tiles.

Aptly, the abutting edges of adjacent flooring sections are partially covered by at least one connector.

According to a fourth aspect of the present invention there is provided a method of manufacturing a connector for connecting sections of flooring together, the method comprising:
providing a carrier layer comprising a biodegradable or compostable or recyclable material;
applying an adhesive layer on a side of the carrier layer to form an adhesive substrate, wherein the adhesive layer comprises a biodegradable or compostable material or recyclable; and
forming or cutting the adhesive substrate into a connector;
wherein the connector is configured such that, in use, the adhesive layer adheres to the underside of adjacent flooring sections to couple the adjacent flooring sections together.

Aptly, the method further comprises the step of releasably coupling a liner material to the adhesive layer.

Aptly, the method further comprises the step of applying an adhesive positioning element to the side of the carrier layer opposed to the adhesive layer.

According to a fifth aspect of the present invention there is provided a method of disposing of a connector used to connect sections of flooring together within a floor covering, wherein the connector is a connector according to any of the first aspect of the invention (having a biodegradable or compostable carrier layer and adhesive layer), the method comprising:
separating the connector from the sections of flooring to which the connector is adhered; and
facilitating the biodegradation or compositing of the connector.

According to a sixth aspect of the present invention there is provided a method of disposing of a connector used to connect sections of flooring together within a floor covering, wherein the connector is a connector according to any of the first aspect of the invention (having a recyclable carrier layer and adhesive layer), the method comprising:
displacing the sections of flooring, wherein the connector remains attached to at least one section of flooring following displacement; and
recycling the sections of flooring, with the connector attached to the at least one section of flooring.

According to a seventh aspect of the present invention there is provided a method of installation of the floor covering of the third aspect of the invention, the method comprising:
positioning a connector according to the first aspect of the invention on a substrate, for example a floor, with the adhesive layer oriented upwardly (i.e. away from the floor);
positioning a portion of at least first and second adjacent flooring sections on the connector such that the flooring sections become coupled (that is, each flooring section is adhered to the connector); and
repeating the above step to produce a floor covering.

Examples of the present invention will now be described hereinafter, by way of example only, with reference to the accompanying drawings in which:
Figure 1 illustrates an exploded perspective view of a connector for connecting sections of flooring together;
Figure 2 illustrates a back view of the connector of Figure 1;
Figure 3 illustrates a perspective view of a dispensing apparatus for dispensing the connector of Figure 1;
Figure 4 illustrates an example section of a floor covering, shown in plan view, including a connector of Figure 1;
Figure 5 illustrates another example section of a floor covering, shown in plan view, including a connector of Figure 1;
Figure 6 illustrates an exploded perspective view of another connector for connecting sections of flooring together;
Figure 7 illustrates an exploded perspective view of another connector for connecting sections of flooring together;
Figure 8 illustrates a perspective view of a dispensing apparatus for dispensing the connector of Figure 7;
Figure 9 illustrates an exploded perspective view of another connector for connecting sections of flooring together; and
Figure 10 illustrates a back view of the connector of Figure 9.

In the drawings like reference numerals refer to like parts.

As used herein a 'layer of the connector' refers to a planar material extending across the profile of the connector. The connector described herein is multi-layered (that is, the connector includes two or more parallel layers - for example a carrier layer and an adhesive layer) such that a cross-section thereof includes two or more distinct materials. In general each layer is a generally sheet-like film or substrate. As used herein, reference to a 'side of a layer' indicates a planar side, or face, of the film (rather than the thickness).

As used herein 'sections of flooring' refers generally to discrete sections of flooring used as part of a modular arrangement, for example carpet tiles or rolls of carpet.

As used herein the term 'biodegradable' refers to a material that is capable of being substantially broken down or decomposed (for example >90% of the material mass) into its constituent, natural, elements (e.g. CO₂, water and biomass/minerals) by biological processes (for example by bacteria or other living organisms). It would be generally understood that the timescale for such biodegradation within the context of this application would be 'short' - that is, within about 6 months to about 18 months.

As used herein the term 'compostable' refers to a biodegradable material that is capable of being broken down or decomposed into its constituent, natural, elements (e.g. CO2, water and biomass/minerals) by biological processes (for example by bacteria or other living organisms) without leaving a visible, distinguishable or toxic residue. The process of composting typically requires specific compositing conditions (for example levels of heat, water, oxygen and micro-organisms). Such conditions may be achieved domestically or may require industrial treatment (i.e. industrial compositing).

Several standards or certifications exist to indicate compostability (domestic and/or industrial compostability). For example a non-limiting list of standards which may be taken as an indication of a compostable material is:
- EU standard EN 14995 - 'Plastics - Evaluation of compostability - Test scheme and specifications'
- EU standard EN 13432 - 'Packaging waste directive and standards for compostability'
- ASTM D6400 - 19 - Standard Specification for Labeling of Plastics Designed to be Aerobically Composted in Municipal or Industrial Facilities'
- TUV Austria - 'OK compost HOME'; 'OK compost INDUSTRIAL'; 'OK biodegradable' certifications.

For example the term 'compostable' may herein refer to a material that meets the EU standard EN 13432 (or likewise any or all of the standards listed here). Specifically, meeting the standard EN 13432 requires that compostable (packaging) material must meet the following requirements in a professional composting plant:
- At least 90% of the product must decompose to particles of less than 2 mm within 12 weeks.
- Within 6 months, the product must decompose into organic substances (CO2 and minerals).
- The maximum permitted concentrations for heavy metals (Cu, Zn, Ni, Cd, Pb, Hg, Cr, Mo, Se, As) and fluorine must not be exceeded.
- The added product may not have a harmful effect on the quality of the compost.

It is noted that all compostable materials are, by definition, biodegradable (but all biodegradable materials are not necessarily compostable). It would be understood that in certain aspects of the invention it may be preferable that the carrier layer and/or the adhesive are compostable (as opposed to solely biodegradable).

### Detailed Description

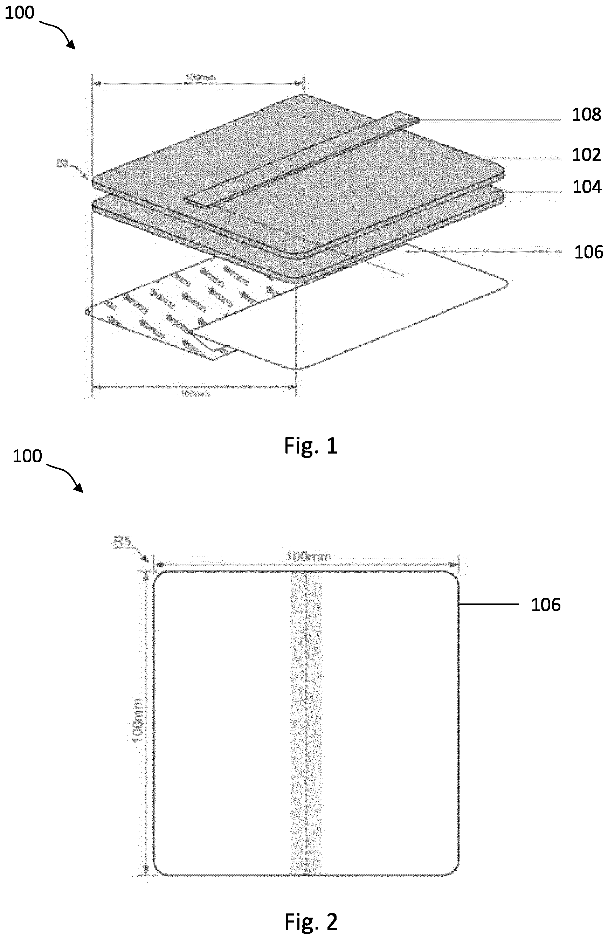

Figure 1 illustrates an example of a connector 100 for connecting sections of flooring together.

The connector 100 includes a carrier layer 102 and an adhesive layer 104 located on a side of the carrier layer 102. In this example, the adhesive layer 104 substantially covers the side of the carrier layer 102 (the 'upper side' of the carrier layer 102 when in use). However in other examples, the adhesive layer 104 may cover from about 60 to 100% of the surface area of the side of the carrier layer 102.

In this example, the connector 100 further includes a liner material 106 releasably coupled to the adhesive layer 104. In use, the liner material 106 is released so as to expose the adhesive layer prior to adhesion to sections of flooring. In this example, as best shown in Figure 2, the liner material 106 is a 2-part liner. That is, the liner material 106 includes two removable portions.

In this example the connector 100 includes an adhesive positioning element 108 located on the side of the carrier layer 102 opposed to the adhesive layer 104 (the 'lower side' of the carrier layer 102 when in use).

In this example, the adhesive positioning element 108 comprises a narrow strip (relative to the carrier layer 102) of adhesive material that extends substantially across the width of the carrier layer 102. That is, the adhesive positioning element 108 provides only partial coverage to the corresponding surface of the carrier layer 102. In this manner, the adhesive positioning element 108 allows the connector 100 to be easily removable, which is helpful during the initial positioning of the connector 100 on the underlying floor surface. In the illustrated example, the adhesive positioning element 108 has a width of about 10 mm.

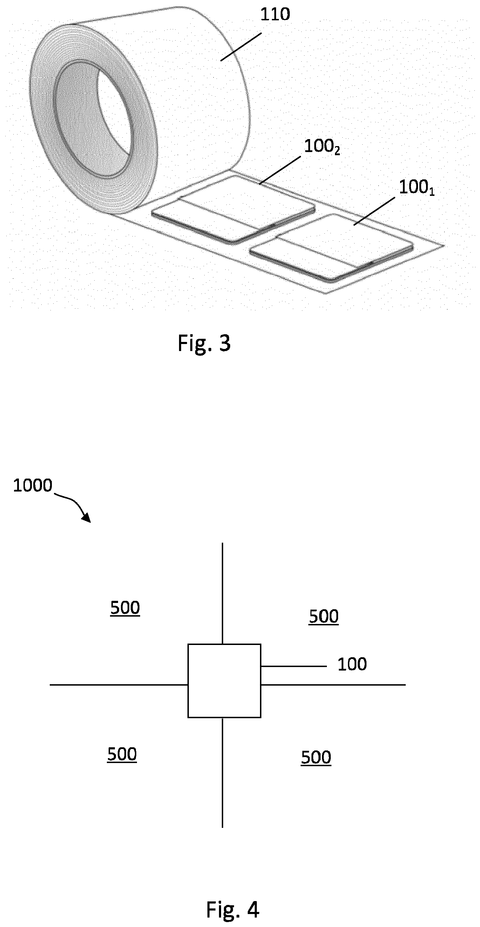

Figure 3 illustrates an example of a dispensing apparatus, for supporting and dispensing the connectors 100. In this example, the dispensing apparatus includes a supporting strip or roll 110. One or more connectors 100 are releasably attached or adhered to the supporting strip 110 (two connectors 100_{1,2} are shown in Figure 3). In use, each of the one or more connectors 100 is released and subsequently dispensed from the roll 110, with the roll 110 being unwound to reveal further connectors when necessary. In the example of Figure 3 the connectors 100 are adhered to the supporting strip 110 via the adhesive positioning element 108. In this manner, upon release the connectors 100 are ready to be adhered to the floor for positioning (via the adhesive positioning element 108), while the liner material 106 remains in place to protect the adhesive layer 104 underneath until the installer is ready to lay the flooring sections.

The connector 100 is configured such that, in use, the adhesive layer 104 adheres to the underside of adjacent flooring sections, for example carpet tiles, to couple the adjacent flooring sections together. That is, the adhesive layer 104 forms a bond with the underside of adjacent carpet tiles (for example adjacent, abutting, carpet tiles) so as to connect adjacent carpet tiles together and restrict relative movement between the adjacent sections of carpet.

In general, the connector 100 is much smaller than the flooring sections that it is used to connect/couple. For example, the connector 100 may have a (plan) surface area of between 0.5 and 10 % of the flooring sections it is being used to couple, aptly between 1 and 6 %.

The connector 100 is configured/sized such that, in use, it only partially extends along the edges of coupled flooring sections. That is, in contrast to a carpet tape that may extend along the entirety of abutting edges of adjacent flooring sections, the size of the connector 100 is selected such that it only partially covers / extends along abutting edges of adjacent flooring sections. Put another way, the connectors 100 are discrete in nature, rather than continuous rolls of tape. This helps reduce the volume of material, and hence material costs, required to provide a connection between flooring sections. As an example, the connector 100 may extend along from about 2 to about 25% of abutting edges of adjacent flooring sections, aptly, from about 5 to about 15% of abutting edges of adjacent flooring sections.

In use, the above described connectors are used as part of a floor covering. Such a floor covering includes a plurality of flooring sections (e.g. carpet tiles) and a plurality of connectors with adjacent flooring sections being coupled by at least one connector.

The floor covering is installed in the following manner. Firstly, a connector 100 as described above is positioned on a substrate, for example a floor or floor-covering material, with the adhesive layer 104 oriented upwardly (i.e. away from the floor). The adhesive positioning element 108, when used, adheres to the floor to help maintain the position of the connector 100 during the subsequent laying of flooring sections. The liner material 106 may be removed from the adhesive layer 104 before or after the connector 100 is positioned on the floor.

At least first and second adjacent flooring sections are then positioned on the connector 100. In some examples, the flooring sections may have been pre-positioned in their intended locations on the floor, such that temporary displacement of at least a portion of the flooring sections is required to allow the connector 100 to be positioned on the floor (for example a corner or edge portion of the flooring section may be pulled back). In other examples, the flooring sections are lowered into position once the connector 100 is in position.

The first and second flooring sections are coupled into position by the connector 100. That is, the portion of the underside of each flooring section in contact with the connector 100 becomes adhered to the connector 100, such that the flooring sections are indirectly connected to one another via the connector 100.

In general, the flooring sections are positioned on the connector in an abutting manner. That is, the flooring sections are arranged on the connector such that edges of adjacent sections abut. Depending on the arrangement of flooring sections within the floor covering, the flooring sections generally share the surface area of the connector 100, so that sufficient adhesion is provided to all flooring sections. For example, where the connector 100 is used to couple first and second flooring sections, each flooring section may occupy approximately 50% of the surface area of the connector (that is the edges of the abutting flooring sections may substantially bi-sect the surface of the adhesive layer 104). As a further example, where the connector 100 is used to couple four sections of flooring, each flooring section may occupy approximately 25% of the surface area of the connector.

As the connector 100 is smaller than the flooring sections, only a portion of the at least first and second flooring sections are positioned on the connector 100, for example a corner or edge portion. It would be understood that any number of connectors may be positioned along the edges of adjacent flooring sections, however it is intended that connectors are required only at discrete positions within the floor covering (for example at the corners only, or at intermediate edge positions, rather than continuously along all edges of the flooring sections).

Repeating the above described steps produces a floor covering - i.e. further connectors are laid to couple further flooring sections until a floor covering is installed.

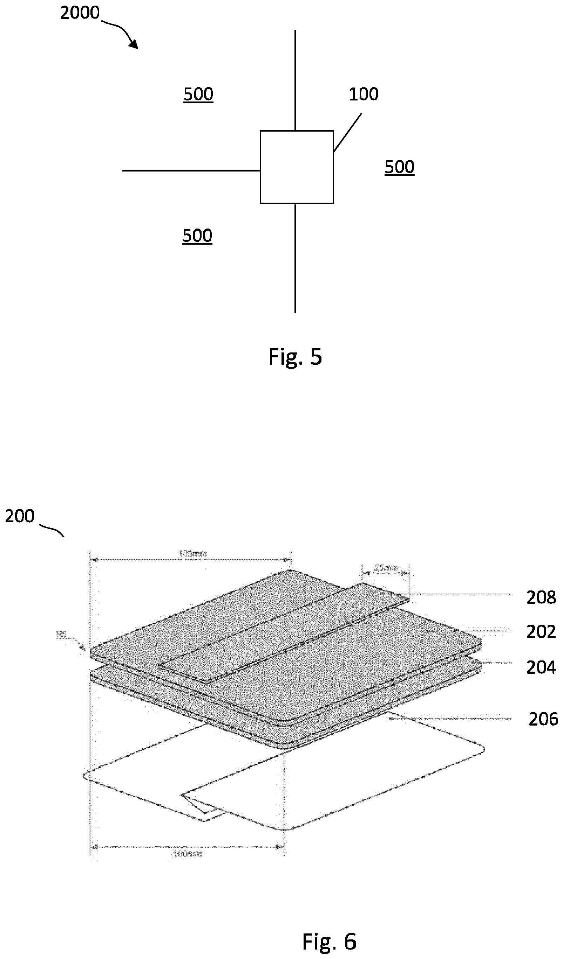

Figures 4 and 5 illustrate example sections of floor coverings including a connector 100 and flooring sections 500. In Figure 4, the floor covering 1000 includes (in general) four flooring sections 500 coupled at each connector 100 (only a section is illustrated). In particular, a corner of each flooring section 500 is adhered to the connector 100. In Figure 5, the floor covering 2000 includes (in general) three flooring sections 500 coupled at each connector 100 (only a section is illustrated). In particular, two flooring sections 500 are adhered to the connector 100 by their corners. A further flooring section 500 is adhered to the connector 100 at a position 'mid-edge' to produce a brickwork arrangement. It would be understood that in a further example, only two flooring sections 500 may be coupled at each connector 100 - for example at the edges of the floor covering.

The carrier layer 102 comprises a biodegradable or compostable or recyclable material. In examples where the carrier layer 102 is biodegradable or compostable the carrier layer 102 is formed of a biodegradable or compostable material such that the carrier layer 102 is in itself biodegradable or compostable.

Aptly, the carrier layer 102 comprises an organic material (that is, a material originally derived from living organisms and their waste products) to enhance the sustainability of the carrier material. Aptly, the carrier layer has a low content of VOCs.

In this example, the carrier layer 102 has suitable mechanical properties to help prevent relative movement between adjacent flooring sections when adhered to the connector 100, for example as a result of the loads applied to the flooring sections in use. For example, the carrier layer 102 may have a tensile strength of at least 30 MPa, aptly at least 100 MPa, aptly at least 150 MPa, aptly from about 30 MPa to about 180 MPa, aptly from about 80 MPa to about 180 MPa, aptly from about 150 MPa to about 180 MPa. It would be understood that there may be variation between the tensile strength of the carrier layer 102 in the machine and cross-machine directions depending on the method of manufacture thereof. The carrier layer 102 may have an 'elongation before break' of from about 15% to about 160%, aptly from about 20% to about 150%. Again it would be understood that there may be variation between the elongation before break of the carrier layer 102 in the machine and cross-machine directions depending on the method of manufacture thereof.

The carrier layer 102 may have any suitable thickness, depending on the material used and the required flexural stiffness of the carrier layer 102. For example, the carrier layer 102 may have a thickness from about 20 microns to about 100 microns.

In examples where the carrier layer 102 is biodegradable or compostable, the carrier layer 102 may include a biopolymer, a biofilm or a non-woven material made from polymeric biomolecules (derived from cellular or extracellular matter). Suitable biopolymers may include PLA (polylactic acid). In general, the three main classes of biopolymers which may be used are: polynucleotides, polypeptides, and polysaccharides.

Suitable biofilms may include cellulose films, for example a bio-based organic film based on cellulose, grass paper, bagasse paper or cotton/fabrics (preferably recycled). Suitable biofilms may include a biopolymer as mentioned above.

In examples where the carrier layer 102 is recyclable, the carrier layer 102 may be chosen so as to be compatible with the recycling processes for carpet tiles. That is, it is preferable that the carrier layer 102 can be blended with carpet tiles (which may be constructed from PET and PP for example) during the recycling thereof. In this way, it is not essential that the connector be removed from the carpet tile prior to recycling. For example the carrier layer 102 may be constructed from a PET material (preferably sourced from recycled raw materials).

**Table 1 (below) illustrates the properties of some example carrier layer materials:**

| Material | Elongation before break | | Tensile strength | | Thickness |
|---|---|---|---|---|---|
| | Machine direction | Cross-machine direction | Machine direction | Cross-machine direction | |
| cellulose film (example) | 22% | 70% | 125 MPa | 70 MPa | 27.7-31.2 microns |
| PLA, polylactic acid (example) | 25 - 149 % (80% mean average) | 61 - 83 % (72% mean average) | 57.3 MPa | 100.6 MPa | 50-60 microns |
| PET '23 microns' | 140% | 100% | 190 MPa | 250 MPa | 23 microns |
| PET '36 microns' | 140% | 125% | 260 MPa | 280 MPa | 36 microns |

The adhesive layer 104 also comprises a biodegradable or compostable or recyclable material. In examples where the adhesive layer 104 is biodegradable or compostable the adhesive layer 104 is formed of a biodegradable or compostable material such that the adhesive layer 104 is in itself biodegradable or compostable.

In examples where the adhesive layer 104 Is biodegradable or compostable, any suitable biodegradable or compostable adhesive may be used for the adhesive layer 104. The preferable adhesion (with adhesion being defined, for example, by the 90 degree peel adhesion as tested under ASTM D3330) provided by the adhesive layer 104 will depend on the material of the underside surface of the flooring section. For example, a rougher surface may require a stronger adhesive. In general, however, the resulting bond between the adhesive layer 104 and the underside of the flooring sections should be strong enough so as to prevent relative movement between the flooring sections.

The thickness of the adhesive layer 104 may vary depending on the material of the underside of the flooring section. For example, a thicker adhesive layer 104 may be used when the underside of the flooring section includes a rougher material. For example, the adhesive layer 104 may have a thickness from about 0.03mm to about 0.3mm.

In this example, the adhesive layer 104 includes a releasable adhesive. That is, the adhesive used for the adhesive layer 104 is strong enough so as to provide the necessary coupling between floor sections, but still allows the connector to be removed from the floor sections if necessary.

In this example, the adhesive layer 104 comprises a modified acrylic adhesive. For example, the modified acrylic adhesive may be a water-borne PSA based on a modified acrylic copolymer with a high content of renewable (non-fossil derived) materials. Such an adhesive may have a 90 degree adhesion of 250 N/m; FTM 2 stainless steel. Such an adhesive would be certified to European compostable packaging standard EN 13432.

In examples where the adhesive layer 104 Is recyclable, any suitable renewable adhesive may be used for the adhesive layer 104. For example, the adhesive layer 104 may comprise an adhesive including 100% solids (that is, a solid solvent-free adhesive that does not require a liquid carrier or contain any harmful chemicals like most emulsion acrylates). Such an adhesive can provide a particularly clean removal from sections of floor in comparison to other solvent based adhesives. For example, the adhesive may comprise a rubber material. In general such rubber materials (and more generally adhesives including 100% solids) can be easily melted and blended with PET and PP from carpet tiles during the recycling thereof. Other acrylate adhesives do not melt in this manner, making them a burden on the recycling process as they tend to contaminate the filtration system.

In this example the adhesive positioning element 108 is formed of a releasable adhesive to allow the position of the connector 100 to be adjusted during installation. In this example, the adhesive positioning element 108 is formed of a biodegradable or compostable material. For example, the adhesive positioning element 108 may be formed of the same adhesive material as the adhesive layer 104. However, in other examples the adhesive positioning element 108 may include a different adhesive material to the adhesive layer 104 (for example if the connector is to be used on an underlying floor surface that is very different to the underside of the flooring sections).

In examples where the main constituent parts of the connector (put another way, the parts of the connector coupled to the flooring sections in use - i.e. the carrier layer and the adhesive layer) are biodegradable or compostable, the connector can be disposed of in a responsible manner. Specifically, the connector can be composted (industrially or in some cases domestically) or left to degrade in a controlled environment. In some examples, the connector (for example where the connector is suitable for non-industrial compositing) the connector would still degrade within a reasonable time-scale even if it were to end up in landfill.

To dispose the connector 100 in a responsible manner, the connector 100 is first released/separated from the sections of flooring to which it is adhered. In examples where the connector includes an adhesive positioning element 108, this is also separated from underlying floor surface.

The connector 100 is then disposed of through the facilitation of the biodegradation or compositing of the connector 100. Put another way, the connector is deposited or positioned in an environment in which it will biodegrade and/or compost. This may be in a standard composting environment (for example a domestic compost heap), which allows the decomposition of the connector even if sent to landfill, or an industrial composting environment, which allows control of the resulting compost. The connector is then left in this environment (or moved between similar environments) for a (generally predetermined) period of time so as to allow biodegradation of composting of the connector.

For example, facilitation of the biodegradation or composting of the connector may include depositing the connector in an industrial composting plant for about 12 weeks such that at least 90% of the connector has decomposed into particles of less than 2mm. The connector may be maintained in said plant for a total of about 6 months such that the product has decomposed into organic substances (CO₂ and minerals).

In some examples, the disposal further includes the step of separating the adhesive layer 104 from the carrier layer 102, and separately the biodegrading and/or composting the adhesive layer 104 and the carrier layer 102.

In examples where the carrier layer 102 and the adhesive layer 104 are recyclable, the connector may be disposed of by recycling. For example the connector may be recycled with the carpet tiles to which they are attached. As an example, sections of flooring may be displaced from their in-situ position with connector(s) still attached. The sections of flooring (with connectors attached thereto) may then be recycled according to known recycling processes.

Figure 6 illustrates another example of a connector 200 for connecting sections of flooring together. Corresponding features to that of connector 100 are labelled in the same manner with prefix 2-. In this example the adhesive positioning element 208 is wider in comparison to that shown for the connector 100. Specifically, in this example the adhesive position element 208 is approximately 25 mm in width.

In general, the adhesive positioning element 208 may be configured with any suitable dimensions. For example, the adhesive positioning element may cover from about 10% to about 100% of the carrier layer 202. An adhesive positioning element 208 providing coverage of from about 10% to about 30% of the carrier layer 202 (corresponding to a width of from about 10 mm to about 30 mm in the arrangement illustrated in Figures 1 and 6) is particularly advantageous in providing sufficient adhesion with the underlying floor while ensuring the connector can be easily removed without leaving a significant residue. The adhesive positioning element 208 may be configured in any suitable shape - for example the adhesive positioning element 208 may be square or circular in shape, although a strip shape is particularly advantageous in that is simple to laminate onto the carrier layer 202.

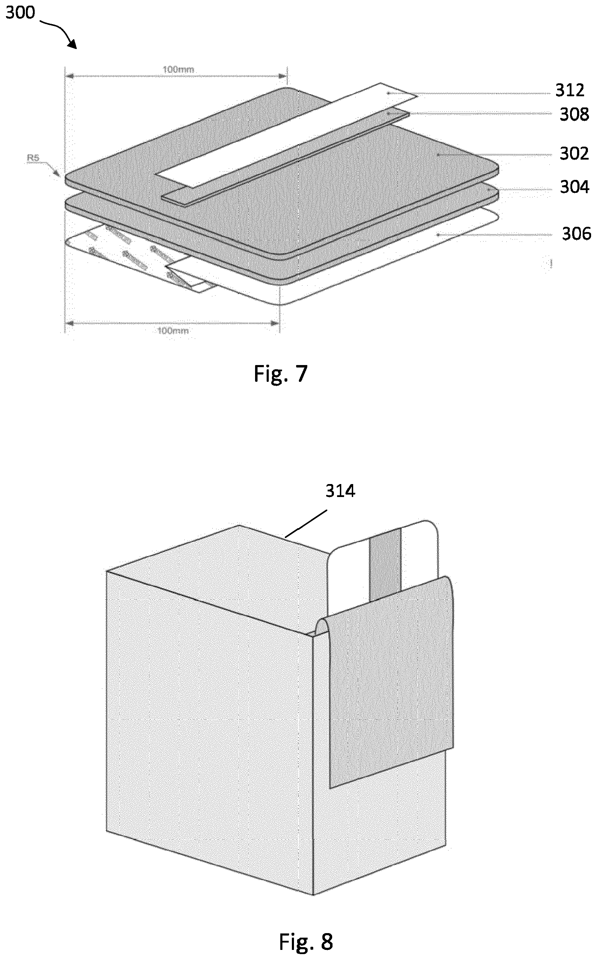

Figure 7 illustrates another example of a connector 300 for connecting sections of flooring together. Corresponding features to that of connector 100 are labelled in the same manner with prefix 3-. In this example the connector further includes a liner 312 on the adhesive positioning element 308. The liner 312 is removed before use, to reveal the adhesive positioning element 308. Figure 8 illustrates another means by which to dispense the connectors, in particular connectors 300. The dispensing means includes a dispensing box 314 configured to house the connectors 300. The connectors 300 are removed from the box 314 prior to use. This provides a simple means by which to house and dispense the connectors 300.

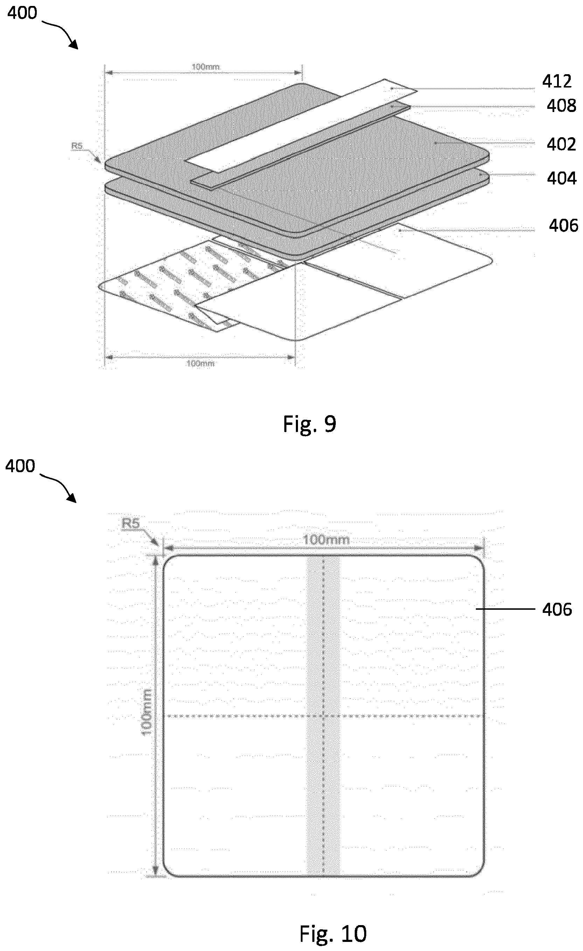

Figure 9 illustrates another example of a connector 400 for connecting sections of flooring together. Corresponding features to connector 100 (and connector 300) are labelled in the same manner with prefix 4-. In this example the liner material 406 is a 4-part liner. That is, the liner material 106 includes four removable portions. As such, the liner 'parts' may be removed sequentially as required (for example with each liner part being removed prior to adhesion of a flooring section on the exposed area). In this manner the adhesive layer 404 remains covered by the liner 406 during installation and reduces the risk of contamination from footsteps of the furnisher etc. It may also help ensure the flooring sections are correctly positioned on the connector.

The connector of any of the above examples may be manufactured by first providing the carrier layer. The carrier layer is typically provided as sheet or film of material. The adhesive layer is then applied onto the side of the carrier layer (for example through lamination) to form an adhesive substrate. The liner material may then be releasably coupled to the adhesive layer. The connectors are then formed or cut from the adhesive substrate into the required shape and size, for example using a die-cutting machine. Typically, the liner material (pre-cut or produced at the correct size) is applied to the adhesive layer once the connector has been cut to size. When including an adhesive positioning element this this may be applied to the side of the carrier layer opposed to the adhesive layer prior to the connector being formed or cut from the adhesive substrate.

### Advantages

The above described connectors allows modular flooring sections to be adhered to an underlying flooring surface without extensive use of adhesive. Specifically, there is no necessity to adhere the entire lower surface of the underlying flooring sections to the floor. In addition, the connectors need only be applied in discrete locations, for example in the corners of the flooring sections rather than extensively along the edges of the flooring sections. The use of releasable adhesive allows the connector to be released from the backing of the flooring sections and the underlying floor.

The above advantages are achieved with a connector that can be decomposed or composted or recycled to allow for responsible disposal or recycled with the sections of flooring.

### Modifications

Various modifications to the detailed designs as described above are possible. For example, a carrier layer and/or adhesive layer may be provided, which is biodegradable, compostable and recyclable, allowing flexibility in the options for sustainable disposable (i.e. recycling or decomposition).

Any of the above described connectors may be provided without the adhesive positioning element. That is, the connector may have an adhesive side (corresponding to the adhesive layer) and a non-adhesive side. As such, the resulting floor covering may be a floating floor covering.

In this example the connector 100 has a substantially square profile. In this example the connector has profile dimensions of about 100mm. However, the connector may be of any suitable shape according to the size/shape of the flooring sections. For example the connector may be rectangular or circular. In the same manner the connector may be of any suitable size according to the size/shape of the flooring sections. For example larger connectors may be used for larger flooring sections. In general, the size of the connector may be limited by the strength of the carrier layer.

It would be understood that the above described connector may be used to couple sections of loose carpet to an underlying floor.

It will be clear to a person skilled in the art that features described in relation to any of the embodiments described above can be applicable interchangeably between the different embodiments.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A connector for connecting sections of flooring together, the connector comprising:
a carrier layer; and
an adhesive layer located on a side of the carrier layer;
wherein the connector is configured such that, in use, the adhesive layer adheres to the underside of adjacent flooring sections to couple the adjacent flooring sections together, wherein the carrier layer comprises a biodegradable or compostable or recyclable material, and
wherein the adhesive layer comprises a biodegradable or compostable or recyclable material.

2. A connector according to claim 1, wherein the carrier layer comprises an organic material.

3. A connector according to any preceding claim, wherein the carrier layer comprises a biopolymer, a biofilm or a non-woven material.

4. A connector according to any preceding claim, wherein the connector comprises a liner material releasably coupled to the adhesive layer.

5. A connector according to any preceding claim, wherein the connector is configured to only partially extend along the edges of coupled flooring sections.

6. A connector according to any preceding claim, wherein the connector comprises an adhesive positioning element located on the side of the carrier layer opposed to the adhesive layer.

7. A connector according to any preceding claim, wherein the adhesive layer comprises an adhesive including 100% solids.

8. A dispensing apparatus, for supporting and dispensing connectors for connecting sections of flooring together, the dispensing apparatus comprising:
a supporting strip; and
one or more connectors according to claim 6;
wherein the adhesive positioning element of each of the one or more connectors is releasably attached to the supporting strip.

9. A floor covering comprising:
a plurality of flooring sections; and
a plurality of connectors according to any of claims 1 to 7,
wherein adjacent flooring sections are coupled by at least one connector.

10. A floor covering according to claim 9, wherein the flooring sections are discrete carpet tiles.

11. A floor covering according to claim 9 or claim 10, wherein the abutting edges of adjacent flooring sections are partially covered by at least one connector.

12. A method of manufacturing a connector for connecting sections of flooring together, the method comprising:
providing a carrier layer comprising a biodegradable or compostable or recyclable material;
applying an adhesive layer on a side of the carrier layer to form an adhesive substrate, wherein the adhesive layer comprises a biodegradable or compostable or recyclable material; and
forming or cutting the adhesive substrate into a connector;
wherein the connector is configured such that, in use, the adhesive layer adheres to the underside of adjacent flooring sections to couple the adjacent flooring sections together.

13. A method of manufacturing a connector according to claim 12, further comprising the step of releasably coupling a liner material to the adhesive layer.

14. A method of manufacturing a connector according to claim 12, further comprising the step of applying an adhesive positioning element to the side of the carrier layer opposed to the adhesive layer.

15. A method of disposing of a connector used to connect sections of flooring together within a floor covering, wherein the connector is a connector according to any of claims 1 to 7, the method comprising:
separating the connector from the sections of flooring to which the connector is adhered; and
facilitating the biodegradation or compositing of the connector.
